# EUROPEAN PATENT APPLICATION

(11) **EP 4 542 802 A1**
(43) Date of publication of application: **23.04.2025**
(21) Application number: 24207067.0
(22) Date of filing: 16.10.2024
(51) Int. Cl.: H02G 3/32, F16B 7/04, F16L 3/04, F16L 3/24

(54) **MOUNTING CLIP**

(30) Priority: 16.10.2023 US 202363590527 P
(71) Applicant: Erico International Corporation, Solon, OH 44139 (US)
(72) Inventor: Anderson, Scott Ernest, Garrettsville, 44231 (US)
(74) Representative: Barker Brettell LLP

(57) **Abstract**

A mounting clip (100) is provided for coupling an elongate object to a mounting bracket (50) that includes a top side and a bottom side (56, 60). The mounting clip (100) can include a set of clip sections (102, 104), including a first clip section (102) and a second clip section (104). An arcuate portion (190) can extend between the first and second clip sections (102, 104). The first clip section (102) can include a first base (108), a first set of clasps (112) to engage the mounting bracket (50), and a set of release tabs. The second clip section (104) can include a second base (128), a second set of clasps to engage the mounting bracket (50), and a set of release tabs. The arcuate portion (190) can include an arcuate band. A first set of fingers (192) and a second set of fingers (196) can extend outwardly from the arcuate band and can be configured to retain the electrical conduit against the mounting bracket (50).

## Description

### BACKGROUND

In many applications, it may be useful to support electrical equipment (e.g., electrical conduit, boxes, fittings, and other components) between structural members (e.g., wall studs). For example, according to some construction standards, electrical equipment may be required to be supported at particular heights above a floor or at particular distances from certain other structures or components.

### SUMMARY

Some embodiments of the invention provide a mounting clip for coupling an elongate object to a mounting bracket that includes a top side and a bottom side. The mounting clip can include a set of clip sections, including a first clip section and a second clip section. An arcuate portion can extend between the first and second clip sections. The arcuate portion can include an arcuate band. A first set of fingers and a second set of fingers can extend outwardly from the arcuate band and can be configured to retain the electrical conduit against the mounting bracket. The first clip section can include a first base; a first set of clasps, including a first clasp and a second clasp that can extend outwardly from the first base in a first direction; and a set of release tabs that can extend outwardly from the first base in a second direction opposite the first direction. The second clip section can include a second base; a second set of clasps, including a third clasp and a fourth clasp that can extend outwardly from the second base in the first direction; and a set of release tabs that can extend outwardly from the second base in the second direction opposite the first direction. The first clasp and the third clasp can be configured to engage the top or bottom side of the mounting bracket and the second and fourth clasp can be configured to engage the other of the top or bottom side of the mounting bracket to secure the mounting clip to the mounting bracket. Release tabs of the first and second sets of release tabs can be configured to be urged toward each other to release the engagement of the first set of clasps and the second set of clasps, respectively, with the mounting bracket.

Some embodiments of the invention provide a mounting clip for coupling an electrical conduit to a mounting bracket. The mounting clip can include a set of clasps extending in a first direction. The set of clasps can be configured to engage opposing sides of the mounting bracket to retain the mounting clip thereon. A band can extend from the set of clasps in a second direction opposite the first direction. The band can be configured to resiliently retain the electrical conduit. The set of clasps can be movable to disengage the mounting clip from the mounting bracket.

Some embodiments of the invention provide a method of securing an elongate object. The method can include aligning the elongate object with a mounting bracket and securing the elongate object to the mounting bracket with a mounting clip by urging a set of clasps of the mounting clip into engagement with the mounting bracket. The set of clasps can include a first subset of clasps that includes a first clasp and a second clasp extending from a first base in a first direction, and a second subset of clasps that includes a third clasp and a fourth clasp extending from a second base in the first direction. The elongate object can be thereby retained relative to the mounting bracket within a band portion of the mounting clip that extends between the first and second subsets of clasps.

Some embodiments of the invention provide a mounting clip for coupling an elongate object to a mounting bracket. The mounting clip can include a clip section and a bridge section. The clip section defines a bracket channel with an entrance. The clip section can be deflectable by movement of the clip section into engagement with the mounting bracket in an installation direction to open the entrance to receive the mounting bracket into the bracket channel. The bridge section extends from the clip section to define an object passage to receive an elongate object along an axial direction. The bridge section can include fingers that extend axially along and into the object passage to be aligned to resiliently engage the elongate object within the object passage, to urge the elongate object toward the bracket channel.

In some examples, the entrance can be a tapered entrance defined by clasps of the clip section. The clasps can be deflectable to widen the entrance upon movement of the clip section into engagement with the mounting bracket in the installation direction to receive the mounting bracket into the bracket channel.

In some examples, the clip section further can include release tabs movable toward each other to widen the entrance.

In some examples, the clip section can be a first clip section and the bracket channel can be a first bracket channel. The mounting clip can further include a second clip section that can be deflectable to open an entrance of a second bracket channel to receive the mounting bracket into the second bracket channel, upon movement of the clip section into engagement with the mounting bracket in the installation direction. The bridge section can include an arcuate portion extending from and between the first clip section and the second clip section.

In some examples, the fingers can include first fingers extending axially from a first axial side of the bridge section and second fingers extending axially from a second axial side of the bridge section, opposite the first axial side.

In some examples, the mounting clip can further include a third finger extending laterally into the object passage to engage the elongate object at an angular and axial offset from the first fingers and the second fingers, and optionally or preferably a fourth finger extending laterally into the object passage opposite the third finger to engage the elongate object at an angular and axial offset from the first fingers and the second fingers.

In some examples, the clip section can be a first clip section, the bracket channel can be a first bracket channel, and the entrance can be a first entrance and the mounting clip can further include a second clip section that can be connected to the first clip section by the bridge section. The second clip section can define a second bracket channel with a second entrance, and being deflectable by movement of the second clip section into engagement with the mounting bracket in the installation direction to open the second entrance, to receive the mounting bracket into the first bracket channel simultaneously with the first bracket channel.

In some examples, the first clip section can further include a third finger that extends laterally into the object passage to biasingly engage the elongate object and the second clip section can further include a fourth finger that extends laterally into the object passage to biasingly engage the elongate object opposite the third finger.

In some examples, the clip section can include a base that connects to the bridge section, and a first clasp and a second clasp that extend from the base in the installation direction to define the entrance.

In some examples, the clip section can further include release tabs extending from the base opposite the installation direction. The release tabs can be aligned to be urged toward each other to move the first and second clasps apart, to release the engagement with the mounting bracket.

In some examples, the clip section can further include stabilizing legs extending laterally away from the first bracket channel and aligned to biasingly engage top and bottom sides of the mounting bracket when the mounting bracket can be received within the first bracket channel.

In some examples, the clip section can further include a locator protrusion that extends into the bracket channel, can be receivable within a corresponding hole in the mounting bracket to prevent translation of the mounting clip laterally along the mounting bracket.

Some embodiments provide for a method of securing an elongate object to a mounting bracket. The method can include aligning the elongate object to extend in an axial direction across the mounting bracket, providing a mounting clip, including a clip section and a bridge section that extends from the clip section, moving the mounting clip into engagement with the mounting bracket in an installation direction to deflect open an entrance of a bracket channel defined by the clip section, to receive the mounting bracket into the bracket channel and receive the elongate object into an object passage defined by the bridge section so that fingers of the bridge section that extend axially along and into the object passage resiliently engage the elongate object within the object passage to urge the elongate object toward the mounting bracket within the bracket channel.

In some examples, the method can include moving the mounting clip into engagement with the mounting bracket in the installation direction. This may involve one or more of inserting a locator protrusion of the mounting clip into a hole in the mounting bracket to fix a lateral location of the mounting clip along the mounting bracket or engaging stabilizing legs that extend laterally from the clip section with top and bottom sides of the mounting bracket to biasingly center the mounting clip on the mounting bracket.

In some examples, the method can further include releasing the mounting clip from the mounting bracket for removal or adjustment by urging together release tabs of the clip section to release clasps of the clip section from engagement with top and bottom sides of the mounting bracket.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with the mounting clip or other device or system may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is a front top left isometric view of a mounting clip according to an embodiment of the invention;
FIG. 2 is a rear top right isometric view of the mounting clip of FIG. 1;
FIG. 3 is a top plan view of the mounting clip of FIG. 1;
FIG. 4 is a left side elevation view of the mounting clip of FIG. 1;
FIGS. 5 and 6 are front elevation views of the mounting clip of FIG. 1 on a mounting bracket and retaining an elongate object therein according to an embodiment of the invention;
FIG. 7 is a rear bottom left isometric view of the mounting clip on the mounting bracket as shown in FIG. 5;
FIG. 8 is a left side elevation view of the mounting clip on the mounting bracket as shown of FIG. 5;
FIG. 9 is an isometric view of a pair of mounting clips as shown in FIG. 1 on a mounting bracket and retaining elongate objects therein according to an embodiment of the invention;
FIG. 10 is a front top left isometric view of a mounting clip according to another embodiment of the invention;
FIG. 11 is a rear top right isometric view of the mounting clip of FIG. 10;
FIG. 12 is a top plan view of the mounting clip of FIG. 10;
FIG. 13 is a right side elevation view of the mounting clip of FIG. 10;
FIG. 14 is a front top left isometric view of a mounting clip according to another embodiment of the invention
FIG. 15, is a rear top right isometric view of the mounting clip of FIG. 14,
FIG. 16 is an isometric view of a pair of mounting clips as shown in FIG. 14 on a mounting bracket and retaining elongate objects therein according to an embodiment of the invention; and
FIG. 17 is a top cross-sectional plan view of the mounting clip of FIG. 14, installed on the mounting bracket of FIG. 16.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

As noted above, in some contexts, it may be useful to secure electrical conduit to structural members (e.g., wall studs) of a structure. Embodiments of the invention can be useful for this purpose, and others. For example, embodiments of the invention can be used to secure an electrical conduit on a mounting bracket at a configurable distance away from structural members (e.g., in a space between adjacent studs in a wall cavity).

In some configurations, the mounting clip can have mounting clip support features provided to aid in maintaining a secure attachment of the mounting clip to the mounting bracket. For example, the mounting clip can have a set of clasps configured to engage with a mounting bracket to attach the mounting clip to the mounting bracket.

In some embodiments, the mounting clip can include locator protrusions configured to be received within holes in the mounting bracket. Placement of the locator protrusions in the holes can maintain the placement of the mounting clip on the mounting bracket.

Further, centering features can be provided to center the mounting clip vertically relative to the mounting bracket when attached to a male section or a female section of a telescoping mounting bracket. For example, biasing tabs (e.g., stabilizing legs) can extend from the mounting clip to contact the top side and the bottom side of the mounting bracket to urge the mounting clip into a centered position.

In some embodiments, a mounting clip can retain an elongate object therein vertically with respect to the orientation of the mounting bracket (e.g., vertically with respect to gravity for a horizontally installed mounting bracket).

In some conventional arrangements, a mounting clip will be mounted to a mounting bracket with fasteners (e.g., screws). This not only adds extra pieces and extra work to mount the mounting clip to the mounting bracket, but it also requires removal of the fasteners if the mounting location must be changed. Additionally, conventional arrangements are configured to accommodate only one size of pipe. Therefore, an installer is required to stock multiple sizes of mounting clips for differently sized pipe. All of this makes stocking and installing these types of mounting clips more cumbersome.

Some embodiments of the invention can address these issues, or others. For example, some embodiments of the invention are presented below in the context of mounting clips for electrical components, wherein the mounting clips are mountable to a mounting bracket without the need for fasteners or tools (e.g., via pressed snap-insertion or other tool-less engagement). Further, more than one size of conduit can be accommodated in some configurations (e.g., via inclusion of resilient fingers that can bias an engaged conduit toward a center of the relevant clip and toward a bracket the clip is secured to). Generally, however, the principles disclosed herein can be used with any variety of mounting clip, including clips for mechanical components, such as, for example, pluming or gas pipes and so on, and can be used to secure any variety of components in place on a mounting bracket.

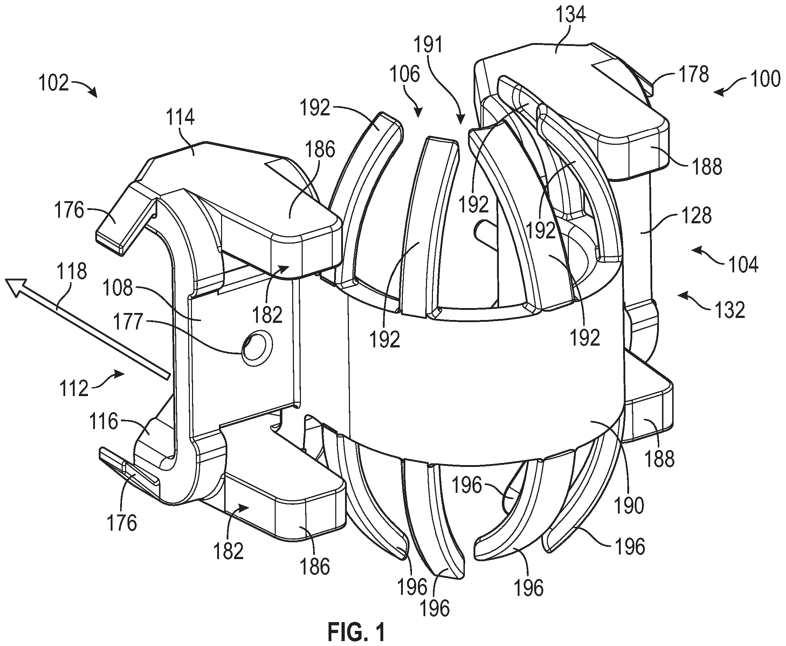

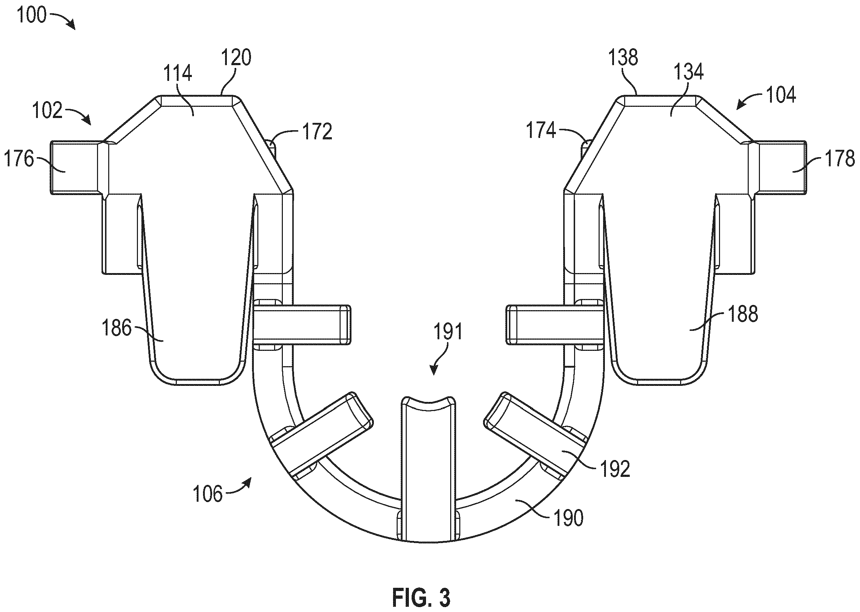

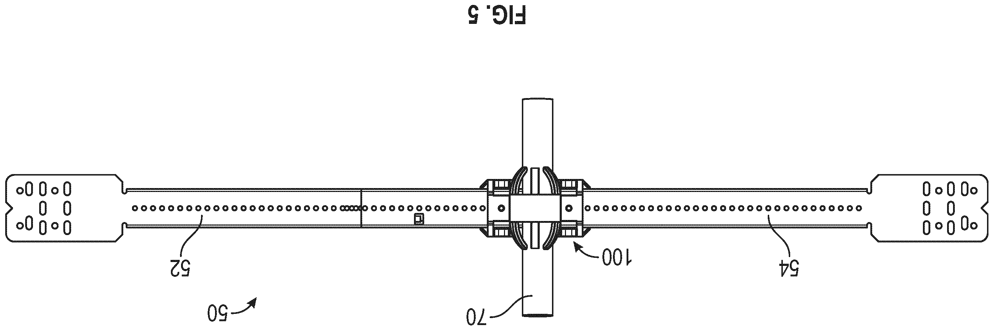

FIGS. 1 through 4 illustrate an embodiment of a mounting clip 100 configured to be mounted to a mounting bracket (e.g., a telescoping mounting bracket 50 shown in FIG. 5 including a male bracket section 52 configured to laterally move within and relative to a female bracket section 54). The mounting bracket includes a top side 56, a bottom side 60, and a vertical side 64 extending between the top and bottom sides 56, 60.

The mounting clip 100 includes a first clip section 102 and a second clip section 104 and a bridge section 106 (e.g., an arcuate bridge, as shown) extending between and joining the first and second clip sections 102, 104. In some embodiments, the mounting clip 100 can include a unitary, one-piece, clip as shown. In the illustrated embodiment, the first clip section 102 and the second clip section 104 can be formed as substantially identical structures, although other configurations are possible. Further, although some examples herein are presented with multiple (e.g., two) clip sections, other examples may include only one clip section (e.g., with a bridge section cantilevered at one end to second from the clip section over a relevant conduit).

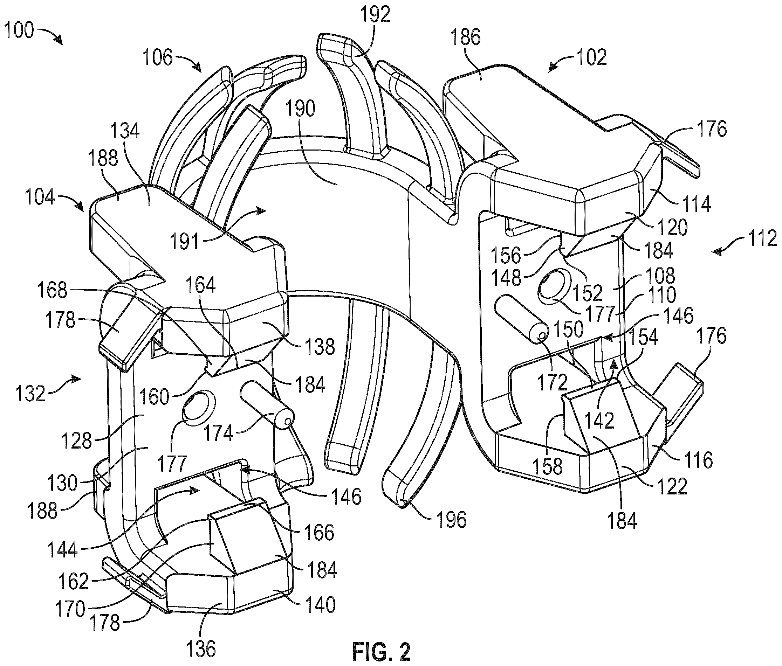

The first clip section 102 has a first base 108 with a first base surface 110 (see FIG. 2) and a first set of clasps 112. In particular, the first set of clasps 112 includes a first clasp 114 and a second clasp 116 that extend from the first base 108 in an installation direction 118 to secure the first clip section 102 to the mounting bracket 50. In particular, the first clasp 114 and the second clasp 116 extend from opposite distal ends 120, 122 of the first base 108 such that the first base surface 110 of the first base 108 is disposed between the first and second clasps 114, 116.

The second clip section 104 is in many aspects similar to the first clip section 102 described above (e.g., substantially identical thereto, as a mirror image thereof). The second clip section 104 includes a second base 128 with a second base surface 130 (see FIG. 2) and a second set of clasps 132. The second set of clasps 132 include a third clasp 134 and a fourth clasp 136 extending from the second base 128. Similarly, the third clasps 134 and the fourth clasps 136 extend from opposite distal ends 138,140 of the second base 128 such that the second base surface 130 of the second base 128 is disposed between the third 134 and fourth clasps 136.

As shown, the first clasp 114 and the second clasp 116 of the first set of clasps 112 are spaced apart from each other to define a first bracket channel 142. As further discussed below (see, e.g., FIG. 5), the first bracket channel 142 can receive the mounting bracket 50 with the first clasp 114 engaging the top side 56 of the mounting bracket 50, the second clasp 116 engaging a bottom side 60 of the mounting bracket 50, and the first base surface 110 of the first base 108 is engaging the vertical side 64 of the mounting bracket 50.

Similarly, the third clasp 134 and the fourth clasp 136 of the second set of clasps 132 are spaced apart from each other to define a second bracket channel 144. The second bracket channel 144 can receive the mounting bracket 50 with the third clasp 134 engaging the top side 56 of the mounting bracket 50 and the fourth clasp 136 engaging the bottom side 60 of the mounting bracket 50, and the second base surface 130 of the second base 128 engaging the vertical side 64 of the mounting bracket 50.

In some cases, the mounting bracket 50 can be received into the second bracket channel 144 simultaneously with the first bracket channel 142 via a translational movement in the installation direction 118 or via a rocking movement in the installation direction 118. Alternatively, the mounting bracket 50 can be received into the second bracket channel 144 (or the first bracket channel 142) and subsequently received into the first bracket channel 142 (or the second bracket channel 144). As discussed further below, the first and second bracket channels 142, 144 define respective entrances 146 through which the mounting bracket 50 is received into the respective channel 142, 144. In the illustrated example, and as further discussed below, the deflectable movement of the first and second clip sections 102, 104 may control a size of the entrance 146.

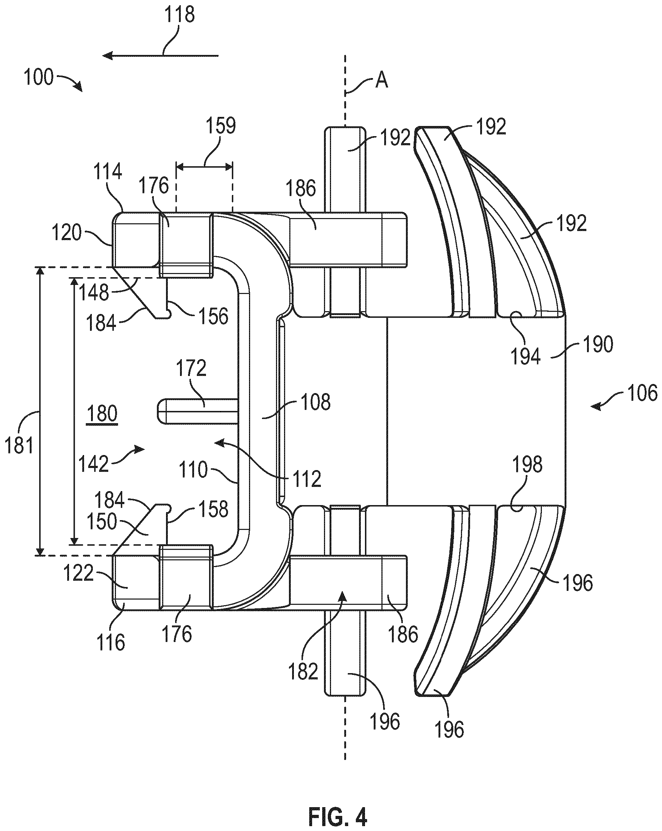

The mounting clip 100 can include various features that allow engagement with the mounting bracket 50. For example, distal ends of the first and second clasps 114, 116 can include a respective barb 148, 150. As shown, for example, the barbs 148, 150 each have a contact surface 156, 158, and the distance between each of the contact surfaces 156, 158 and the first base surface 110 defines a barb distance 159 (shown in FIG. 4). In some examples, the barb distance 159 can be identical or substantially equal to a width of the mounting bracket 50 (not shown in FIG. 4).

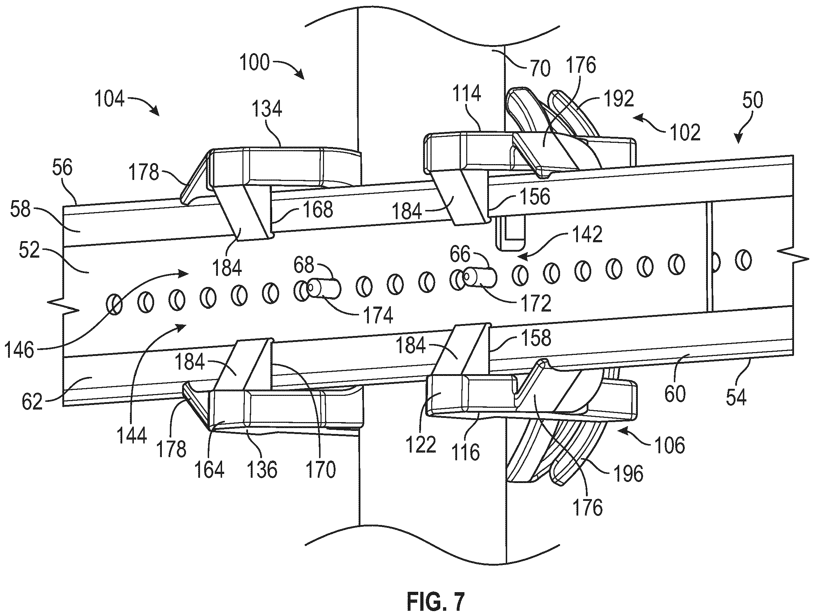

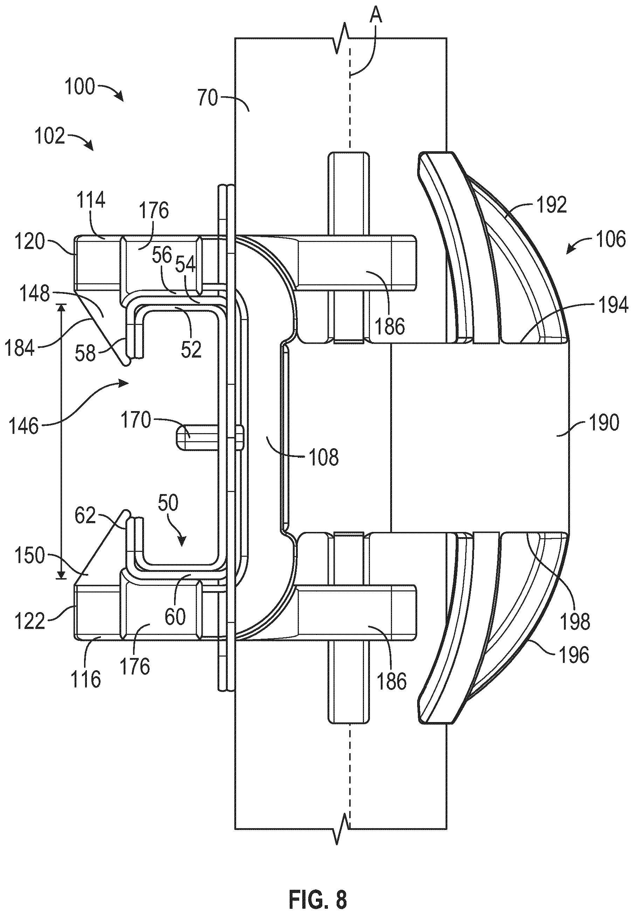

For example, as shown in FIGS. 7 and 8, the mounting clip 100 is shown with the first bracket channel 142 clipped onto the mounting bracket 50. The first contact surface 156 of the first barb 148 engages a first rear side 58 extending from the top side 56 of the mounting bracket 50 and the second contact surface 158 of the second barb 150 engages a second rear side 62 extending from the bottom side 60 of the mounting bracket 50. In some example, as shown, a distal or other protrusion can extend from one or more of the barbs 148, 150 (e.g., toward the surface 110, as shown). Such protrusions, for example can help to further secure particular brackets within the channels 142, 144 (e.g., by helping to block removal of the bracket 50 past the barbs 148, 150.

As described above, the second clip section 104 is in many aspects similar to the first clip section 102 (e.g., substantially identical thereto, as a mirror image thereof). Correspondingly, in the illustrated example (see, e.g., FIG. 2), distal ends 152, 154 of the third and fourth clasps 134, 136 have a respective barb 160, 162 with a contact surface 168, 170.

The mounting clip 100 can also include other features to further aid the engagement of the mounting clip 100 to the mounting bracket 50. For example, in some configurations, a locator protrusion 172 (e.g., a post or other nub, as shown) can extend from the first base surface 110 into the first bracket channel 142. Thus, the protrusion 172 may be receivable into a corresponding hole 66 in the mounting bracket to prevent translation of the mounting clip 100 along the mounting bracket 50 (e.g., transverse to the installation direction 118).

For example, looking at FIG. 7, the locator protrusion 172 of the first clip section 102 is received within the corresponding aligned hole 66 of the mounting bracket 50. Placement of the locator protrusion 172 within the holes 66 can help to maintain the location of the mounting clip 100 on the mounting bracket 50 by preventing the mounting clip 100 from sliding laterally along the mounting bracket 50 (e.g., transversely to the installation direction 118). Similarly, a locator protrusion 174 can extend from the second base surface 130 into the second bracket channel 144 to be receivable into the corresponding aligned hole 68 in the mounting bracket 50, also to help to prevent translation of the mounting clip 100 along the mounting bracket 50.

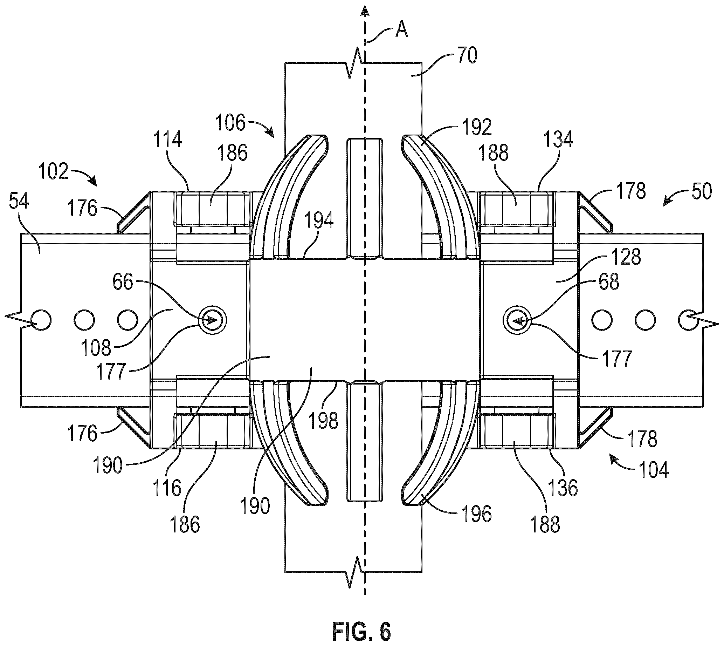

Additionally, or alternatively, as shown in FIG. 6, a hole 177 can be provided that extends through the first base 108 or the second base 128. The hole 177 can be aligned with a hole of the mounting bracket 50 (e.g., selected from a plurality of holes) and configured to receive a fastener (not shown) therethrough, to fixedly secure the mounting clip 100 to the mounting bracket 50. Or some mounting brackets may include one or more protrusions (e.g., similar to the protrusions 174) and a clip can include one or more corresponding holes to receive the bracket protrusions, with generally similar effect as the engagement of the protrusions 172, 174 discussed above.

Additionally, other features can aid in vertically centering the mounting clip 100 on the mounting clip 100 (e.g., as viewed, in the orientation shown in FIG. 6) or ensuring other desired alignment. For example, the first clip section 102 can include first stabilizing legs 176 that extend laterally away from the first bracket channel 142 to biasingly engage the top and bottom sides 56, 60 of the mounting bracket 50 when the mounting bracket 50 is received within the first bracket channel 142. Similarly, the second clip section 104 can include second stabilizing legs 178 that extend laterally away from the second bracket channel 144 to biasingly engage the top and bottom sides 56, 60 of the mounting bracket 50 when the mounting bracket 50 is received within the second bracket channel 144. The first and second stabilizing legs 176, 178 can be cantilevered, elongate, resiliently flexible bodies.

In some embodiments, the stabilizing legs 176, 178 are configured to collectively extend over (and engage with) the top and bottom sides of the mounting bracket 50. For example, in FIGS. 6 through 9, the stabilizing legs 176, 178 are shown extending over and along the top and bottom sides 56, 60 of the female bracket section 54, respectively.

Generally, the resilient and, e.g., angled or cantilevered, configuration of the stabilizing legs 176, 178 allows the stabilizing legs 176, 178 to make and maintain contact regardless variation along the mounting bracket 50 of the bracket depth between the top and bottom sides 56, 60 (e.g., the vertical bracket height in the illustrated orientation). The legs 176, 178 can also flex to help center the mounting clip 100 on the mounting bracket 50 regardless of whether the mounting clip 100 is located on the female section 52 or male section 54, of the mounting bracket 50, or straddling the transition between the male and female bracket sections 52, 54 of the mounting bracket 50.

A stabilizing leg distance 180 (shown in FIG. 4) is defined, with the stabilizing legs 176, 178 in a neutral state as shown, as the vertical distance between the portions of the stabilizing legs 176, 178 configured to contact the mounting bracket 50. The stabilizing leg distance 180 is preferably the same or less than the distance between the top and bottom sides 56, 60 of the female bracket section 54 (shown in FIG. 8) (i.e., the female bracket section height). In particular, the distance 180 may also be less than a clasp distance 181 (shown in FIG. 4) to allow the stabilizing legs 176, 178 to biasingly engage with the mounting bracket 50 to stabilize and center the mounting clip 100 thereon. In the illustrated example, the stabilizing legs 176, 178 extend laterally outwardly away from the corresponding bracket channel 142, 144 or the corresponding locator protrusions 172, 174, although other configurations are possible. In some embodiments, as shown in FIG. 2, the stabilizing legs 176, 178 can extend in the same direction relative to each other from the respective first and second clasps 114, 116 (e.g., so that the legs 176, 178 are aligned with each other across a height of the relevant bracket). However, it is contemplated that the stabilizing legs 176, 178 could extend in the opposite directions from the respective first and second clasps 114, 116.

The first and second clip sections 102, 104 can include a set of release tabs 182 that can be moved (e.g., against a resilient bias, about a clamp pivot point, to enlarge the entrances 146 of the first and second bracket channels 142, 144. For example, as shown, the release tabs 182 can be supported by flexible legs that extend from the bases 108, 128 at top and bottom ends of the channels 142, 144. Accordingly, as shown with arrows in FIG. 4 application of a generally downward force onto ends of the release tabs 182 opposite the channels 142, 144 can resiliently deflect the clasps 114, 116 to enlarge the entrances 146 and allow a bracket to be received into or removed from the channels 142, 144 (or, e.g., to allow adjustment laterally along the bracket).

In some examples, the clip sections 102, 104 can be deflected without direct engagement of corresponding release tabs 182. In particular, in the illustrated example, the movement of the first and second clip sections 102, 104 into engagement with the mounting bracket 142, 144 in the installation direction 118 can deflect a portion of the first and second clip sections 102, 104 to open the entrance 146 to receive the mounting bracket 50 into the first and second bracket channels 142, 144. This opening of the entrances 146 can thus allow the mounting bracket 50 to be received into the channels 142, 144. Upon release of the deflecting force, the entrance 146 can then close and thereby retaining the mounting bracket 50 within the relevant channel 142, 144.

Correspondingly, in some examples, the barbs 148, 150, 160, 162 can include a tapered entrance 184 that is defined by clasps of the mounting clip 100 such that the clasps are deflected to widen the entrance upon movement of the mounting clip 100 into engagement with the mounting bracket 50. Further, the tapered entrance 184 provides smooth engagement by allowing a portion of the mounting bracket 50 to gradually slide into the first and second bracket channels 142, 144.

In the illustrated example, the set of release tabs 182 include a first release tab 186 and a second release tab 188. The first release tab 186 extends from the first base 108 opposite the installation direction 118 (e.g., opposite of the bracket channels). The first release tabs 186 are aligned to be urged toward each other (e.g., via application of a manual force) to move the first and second clasps 114, 116 apart to release the engagement of the first set of clasps 112 with the mounting bracket 50. Similarly, he second release tab 188 extends from the second base 128 opposite the installation direction 118. The second release tabs 188 are aligned to be urged toward each other (e.g., via application of a manual force) to move the third and fourth clasps 134, 136 apart to release the engagement of the second set of clasps 132 with the mounting bracket 50. Thus, generally, the release tabs 186, 188 are movable toward each other to widen the corresponding entrance 146.

Continuing with the mounting clip 100 shown in FIGS. 1 through 4, a bridge section 106 is included. The bridge section 106 extends between the first and second clip sections 102, 104. The bridge section 106 includes an arcuate bridge 190 that defines an object passage 191 to receive the elongate object between the mounting bracket 50 and the arcuate bridge 190, with the object extending in an axial direction along an axis A (see FIG. 4). Along a length of the arcuate bridge 190, a first set of fingers 192 extend from a first axial side 194 of the arcuate bridge 190 (see FIG. 4) into the object passage 191. As further discussed below, this arrangement can align the fingers 192 to biasingly urge an elongate object toward the mounting bracket 50 in the installation direction 118.

Also in the illustrated example, opposite of the first axial side194, a second set of fingers 196 extends into the object passage 191 from a second axial side 198 of the arcuate bridge 190 (see FIG. 4). This arrangement can also (or alternatively) biasingly urge an elongate object toward the mounting bracket 50 in the installation direction 118. In other words, the first set of fingers 192 extends axially from the first axial side 194 of the bridge section 106 and the second set of fingers 196 extend axially from the second axial side 198 of the bridge section 106 opposite the first axial side 194 to collectively secure a length of conduit. In other examples, however, fingers may extend from only one axial side of a bridge section, or can be otherwise configured. In some examples, including as further discussed below, a bridge section can be formed from multiple bands that extend between the first and second clip sections 102, 104 to support one or more sets (e.g., with arcuate, parallel bands to form an arcuate bridge section).

In some embodiments, the first and second set of fingers 192, 196 can include a plurality of arcuate fingers (e.g., with each finger 192, 196 defining an arced profile to extend into the object passage 191. In some examples, tips of arcuate fingers 192, 196 can abut with the elongate object and compress the elongate object such that a portion of the elongate object abuts with the mounting bracket 50. Thus, generally, the first and second set of fingers 192, 196 extend axially along and into the object passage 191 to be aligned to resiliently engage the elongate object within the object passage 191 to urge the elongate object toward the bracket channels 142, 144. In some embodiments, as further discussed below, fingers may extend in parallel with each other.

Additionally, the arcuate bridge 190 defines an axis A around which the arcuate bridge 190 curves. Both the first and second sets of fingers 192, 196 curve inward from the arcuate bridge 190 and toward the axis A. The axis A is oriented substantially perpendicular to the installation direction 118. Further, the bridge section 106 is sized and configured to receive an elongate object therein, such as, for example, the conduit 70 as shown in FIGS. 5 through 8. The first and second sets of fingers 192, 196 are configured to be flexible, so as to be able to conform to the conduit 70 when received within the arcuate bridge 190. In some embodiments, for example, the first and second sets of fingers 192, 196 can provide flexibility to allow the mounting clip 100 to be capable of accommodating more than one size of pipe (e.g., 1/2" pipe and 3/4" pipe), because the first and second sets of fingers 192, 196 are pliable.

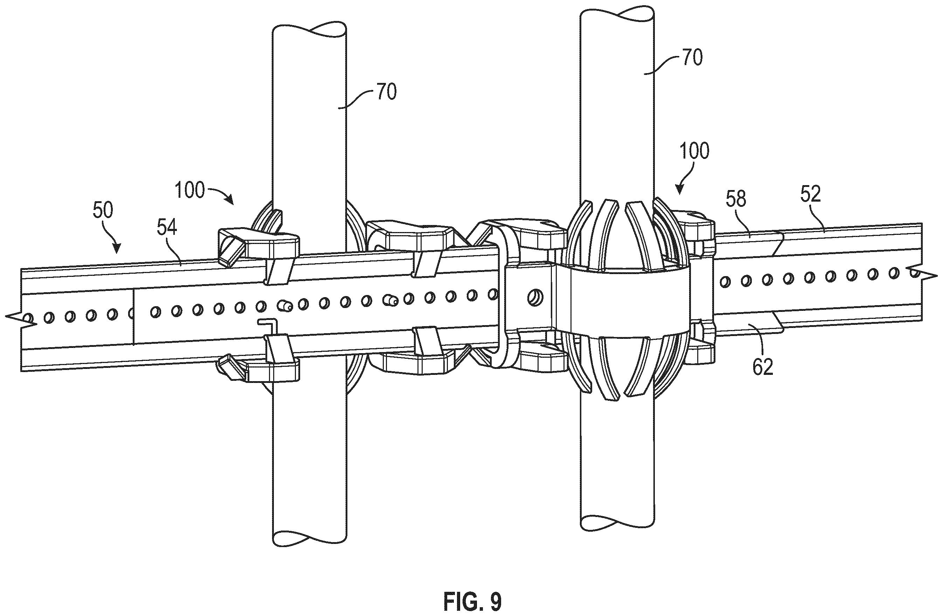

Continuing, as shown in FIGS. 5 through 8, the mounting clip 100 is configured to selectively retain the conduit 70 on opposite (e.g., front and rear) sides of the mounting bracket 50. For example, as shown in FIG. 9, different instances of the mounting clips 100 can be clipped onto both sides (or either side) of the mounting bracket 50 while retaining conduits 70 extending within the first and second set of fingers 192, 196. Or other instances of the clip 100 can be selectively installed with other configurations (e.g., with multiple clips on the same side of the bracket).

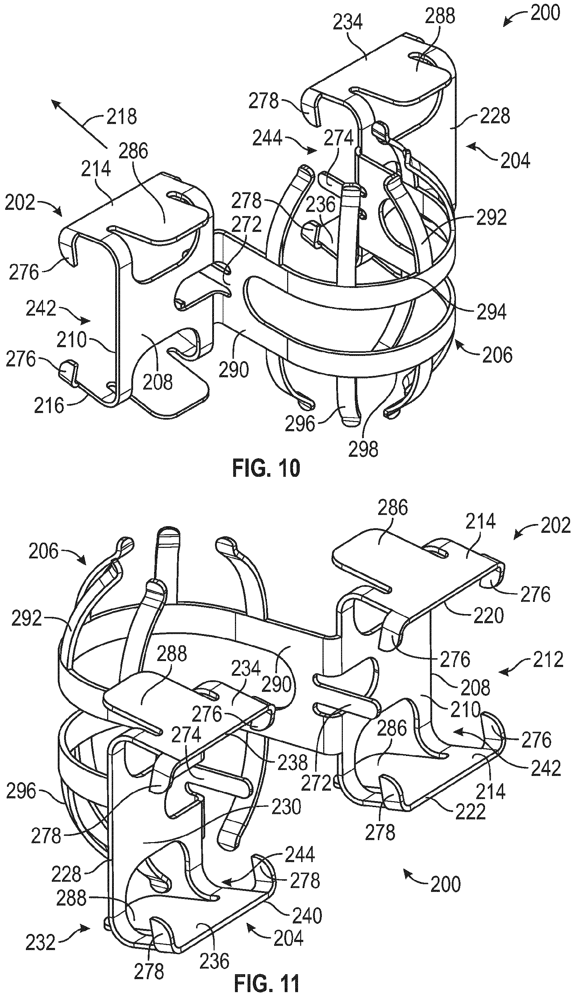

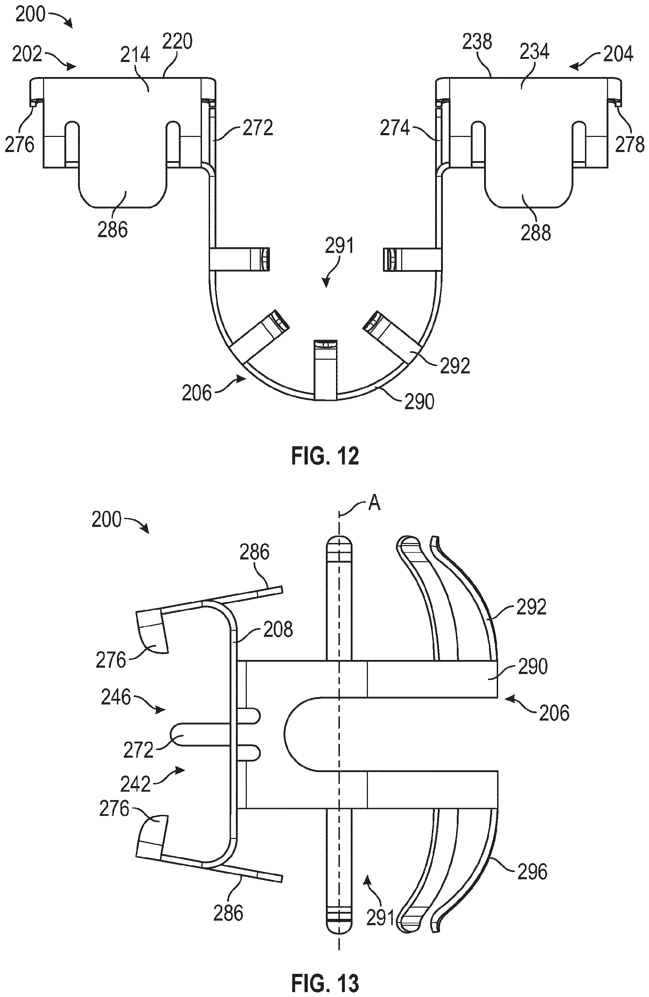

FIGS. 10 through 13 illustrate another embodiment of a mounting clip 200 according to the invention, as also can be attached to a mounting bracket (e.g., the mounting bracket 50 shown in FIG. 5). In many aspects, the mounting clip 200 is similar to the mounting clip 100 described above and similar numbering in the 200 series is used for the mounting clip 100. Accordingly, discussion of the clip 100 above generally applies to similarly named or numbered components of the clip 200 (and vice versa), unless otherwise limited or specified. For example, the mounting clip 200 has a first clip section 202 with a first base 208 having a first base surface 210; first and second clasps 214, 216 extending from the first base 208 in an installation direction 218 away from the first base surface 210; locator protrusions 272, 274; and a first release tab 186, 188 extending from the first base 208. The mounting clip 200 also has a second clip section 204 with a second base 228, with a second base surface 230; third and fourth clasps 234, 236 extending from the second base 228 in the installation direction 218 away from the second base surface 230; a locator protrusion 274; and a second release tab 288. Further, the mounting clip 200 has a bridge section 206 for receiving a conduit (e.g., the conduit 70 shown in FIG. 5 therein). The bridge section 206 has an arcuate bridge 290 with a first and second set of fingers 292, 296 extending upwardly and downwardly (e.g., away from the arcuate bridge) therefrom, respectively.

In some aspects, however, the mounting clips 100, 200 differ from each other. For example, the mounting clip 200 is formed from metal (e.g., spring steel). Because of the material characteristics of spring steel, the first, second, third, and fourth clasps 214, 216, 234, 236 can be configured to have an inherent biasing quality to accommodate placement of the mounting clip 200 at any location along the mounting bracket 50 (i.e., the male bracket section 52, the female bracket section 54, or at a transitional location between the male and female bracket sections 52, 54). For example, the first and second clasps 214, 216 extend from the first base 208 obliquely inwardly toward each other, and the third and fourth clasps 234, 236 are similarly arranged. Correspondingly, the first, second release tabs 286, 288 are disposed outwardly away from the respective oppositely positioned release tabs 286, 288.

Additionally, each of the first, second, third, and fourth clasps 214, 216, 234, 236 have pairs of barbs 248, 250, 260, 262 extending from the respective distal ends 220, 222, 238, 240 thereof.

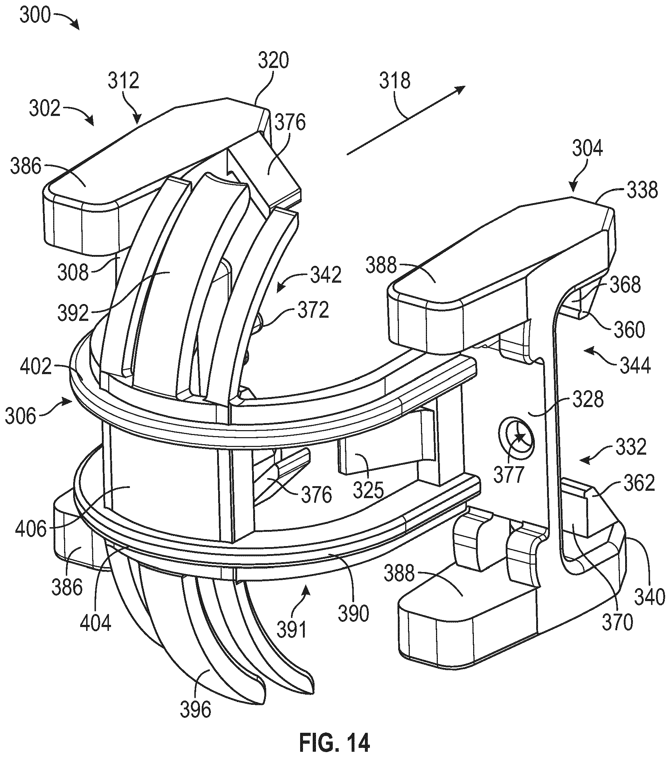

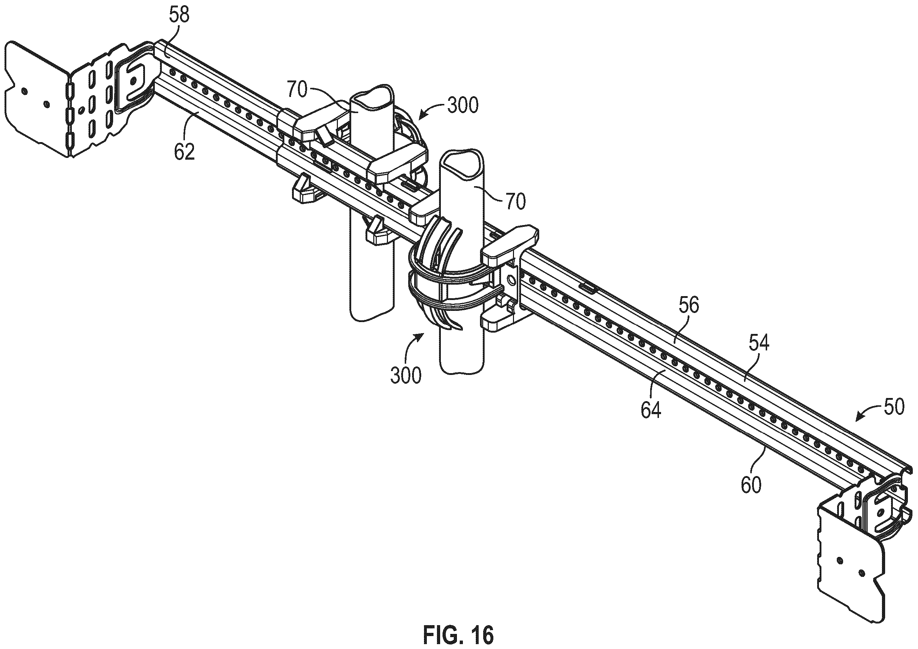

FIGS. 14 through 17 illustrate another embodiment of a mounting clip 300 according to the invention, as also can be attached to a mounting bracket 50. In many aspects, the mounting clip 300 is similar to the mounting clip 100 described above and similar numbering in the 300 series is used for the mounting clip. Accordingly, discussion of the clip 100 above generally applies to similarly named or numbered components of the clip 300 (and vice versa), unless otherwise limited or specified. For example, the mounting clip 300 has a first clip section 302 with a first base 308 having a first base surface 310; first and second clasps 314, 316 extending from the first base 308 in an installation direction 318 away from the first base surface 310; a locator protrusion 372; and first release tab 386 extending from the first base 308. The mounting clip 300 also has a second clip section 304 with a second base 328, with a second base surface 330; third and fourth clasps 334, 336 extending from the second base 328 in the installation direction 318 away from the second base surface 330; a locator protrusion 374; and a second release tab 388. Further, the mounting clip 300 has a bridge section 306 for receiving a conduit (e.g., the conduit 70 shown in FIG. 5 therein). The bridge section 306 has an arcuate bridge 390 that defines an object passage 391 and that includes a first and second set of fingers 392, 396 extending upwardly and downwardly therefrom, respectively (e.g., with fingers 392, 396 extending in parallel with each other, respectively). Similar to the mounting clip 100 above, referring to FIG. 16, the mounting clip 300 can be mounted on both sides of the mounting bracket.

In some aspects, however, the mounting clips 100, 300 differ from each other. For example, the first clip section 302 includes a third finger 324 that extends into the object passage 391 to biasingly engage the elongate object. Similarly, the second clip section 304 includes a fourth finger 325 that extends into the object passage 391 to biasingly engage the elongate object. Generally, the fingers 324, 325 can provide lateral biasing engagement with a conduit, to complement the insertion-direction biasing engagement of the fingers 392, 396 and can correspondingly extend from the clip sections 302, 304 or from the bridge section 306, to protrude laterally into the object passage 391.

In particular, in the examples shown, the third and the fourth fingers 324, 325 extend from a base of the bridge section 306 and between a slot 408 defined between a first bridge portion 402 that is opposite of a second bridge portion 404. The third and the fourth fingers 324, 325 are configured to extends toward the axis A within the slot 408 defined by the void between the first and second bridge portions 402, 404. In other words, the third and fourth fingers 324, 325 extends laterally into the object passage 391 to engage the elongate object at an angular and axial offset from the first and second set of fingers 392, 396. Further, the third and fourth fingers 324, 325 can flex to accommodate different sized conduit within the object passage 391 (e.g., conduit 70, as shown by the dash-dash lines).

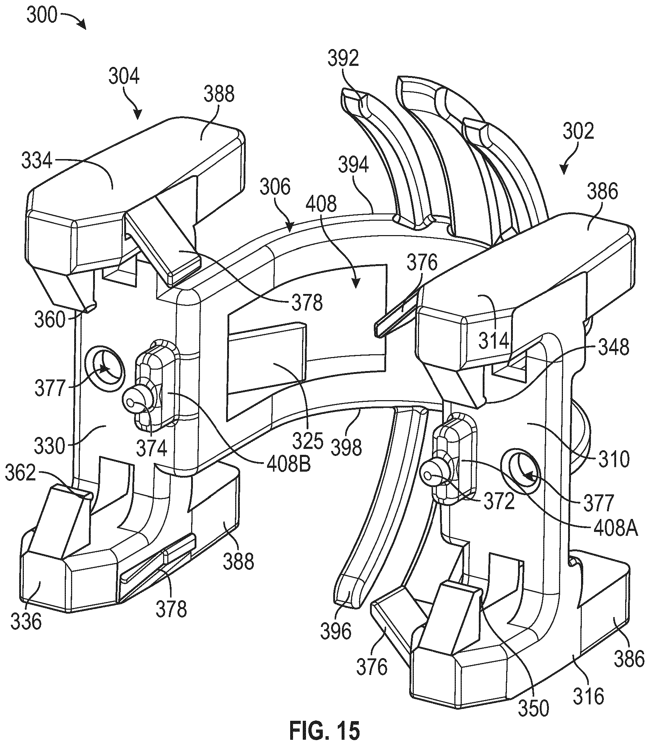

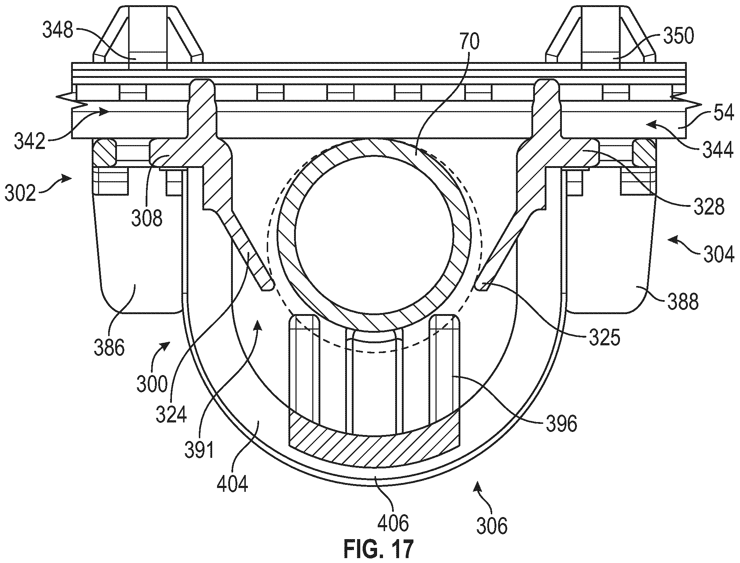

Other differences can also be provided relative to the clip 100. For example, as illustrated in FIG. 17, the first and second bridge portions 402, 404 are connected by a central region 406 and the fingers 392, 396 extend axially away from the central region 406. Furthermore, the stabilizing legs 376, 378 extend inwardly toward the axis A of the object passage 391 (e.g., rather than laterally outwardly, as shown for the legs 176, 178). Further, as shown in FIG. 15 in particular, the locator protrusions 372, 374 can be formed as tiered protrusions, with a wider base portion 408A, 408B, that can be received into a channel of the bracket 50 for improved locating functionality and overall security against inadvertent movement or removal.

In other embodiments, other configurations are possible. For example, certain features and combinations of features that are presented with respect to particular embodiments in the discussion above can be utilized in other embodiments and in other combinations, as appropriate. In this regard, for example, different configurations of engagement features, attachment mechanisms, and so on, as presented with respect to a particular one of the mounting clips 100, 200 can be implemented in combination with features of the other of the clips 100, 200, 300 or others.

In some implementations, devices or systems disclosed herein can be utilized or installed using methods embodying aspects of the invention. Correspondingly, description herein of particular features or capabilities of a device or system is generally intended to inherently include disclosure of a method of using such features for intended purposes and of implementing such capabilities. Similarly, express discussion of any method of using a particular device or system, unless otherwise indicated or limited, is intended to inherently include disclosure, as embodiments of the invention, of the utilized features and implemented capabilities of such device or system.

For example, some embodiments can include an installation method under which a user can install the mounting clip 100, 200, 300 to a mounting bracket (e.g., the mounting bracket 50 shown in FIG. 5). The method can include aligning the elongate object to extend in an axial direction across the mounting bracket (e.g., vertically across a horizontally extending bracket). The mounting clip can then be moved into engagement with the mounting bracket in an installation direction. Such movement of the clip, for example, can deflect open an entrance of a bracket channel defined by the clip section to receive the mounting bracket into the bracket channel and to receive the elongate object into an object passage defined by the bridge section. Thus arranged, fingers of the bridge section that extend axially along and into the object passage can resiliently engage the elongate object within the object passage to urge the elongate object toward the mounting bracket within the bracket channel. For example, translating or rotating the clip into an installed configuration can urge the relevant fingers into engagement with a corresponding conduit or other object, thus helping to biasingly center and secure the object within the clip.

In some cases, moving the mounting clip into engagement with the mounting bracket in the installation direction may insert a locator protrusion of the mounting clip into a hole in the mounting bracket to fix a lateral location of the mounting clip along the mounting bracket. In some cases, moving the mounting clip into engagement with the mounting bracket in the installation direction may engage stabilizing legs that extend from the clip section with top and bottom sides of the mounting bracket to biasingly center the mounting clip on the mounting bracket (e.g., vertically, or otherwise transverse to an installation direction and a lateral direction along the relevant bracket).

In some cases, the mounting clip can be released from the mounting bracket for removal or adjustment. For example, release tabs of the clip section can be urged together to release clasps of the clip section from engagement with top and bottom sides of the mounting bracket.

Continuing, some embodiments of the method can include retaining an elongate object (e.g., the conduit 70 shown in FIG. 5) within the first and second sets of fingers 192, 196 of the bridge section 106 and second clip sections 102, 104. In some embodiments the conduit 70 can be inserted into the bridge section 106 as the mounting clip 100 is being attached to the mounting bracket 50 to retain the conduit 70 therein and thereagainst.

Thus, some examples of the disclosed technology can provide improved clips to secure conduit or other elongate objects on between-stud brackets or other supports. For example, a clip section of a mounting clip can be easily installed onto a support bracket of various configurations, including with improved engagement of the bracket to maintain a secure and fixed installation. Further, a bridge section of a mounting clip can include resilient fingers that can biasingly secure a conduit or other object of various sizes to a bracket (e.g., with engagement of the object simultaneously with push-on or other engagement of the clip with the bracket).

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the mounting clip or other device or system described may be incorporated into/used in a corresponding method and vice versa.

It is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise specified or limited, directional terms are presented only with regard to the particular embodiment and perspective described. For example, reference to features or directions as "horizontal," "vertical," "front," "rear," "left," "right," "upper," "lower," and so on are generally made with reference to a particular figure or example and are not necessarily indicative of an absolute orientation or direction. However, relative directional terms for a particular embodiment may generally apply to alternative orientations of that embodiment. For example, "front" and "rear" directions or features (or "right" and "left" directions or features, and so on) may be generally understood to indicate relatively opposite directions or features for a particular embodiment, regardless of the absolute orientation of the embodiment (or relative orientation relative to environmental structures). In particular, as used herein in the context of a bracket or clip that supports an elongate object that extends transversely across the bracket or axially through the clip, unless otherwise specified or limited, "lateral" and derivatives thereof indicate directions that extend along the bracket or are otherwise transverse to the elongate object. Thus, for example, a lateral movement on a between-stud bracket that supports a vertical length of conduit may include a movement horizontally along the bracket in either direction.

Also as used herein, ordinal numbers are used for convenience of presentation only and are generally presented in an order that corresponds to the order in which particular features are introduced in the relevant discussion. Accordingly, for example, a "first" feature may not necessarily have any required structural or sequential relationship to a "second" feature, and so on. Further, similar features may be referred to in different portions of the discussion by different ordinal numbers. For example, a particular feature may be referred to in some discussion as a "first" feature, while a similar or substantially identical feature may be referred to in other discussion as a "third" feature, and so on.

Also as used herein, unless otherwise specified or limited, "integral" and derivatives thereof (e.g., "integrally") describe elements that are manufactured as a single piece without fasteners, adhesive, or the like to secure separate components together. For example, an element that is stamped, cast, or otherwise molded as a single-piece component from a single piece of sheet metal or other continuous single piece of material, without rivets, screws, other fasteners, or adhesive to hold separately formed pieces together, is an integral (and integrally formed) element. In contrast, an element formed from multiple pieces that are separately formed initially then later fastened together, is not an integral (or integrally formed) element.

Also as used herein, unless otherwise specified or limited, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "only one of," or "a single one of." For example, a list of "only one of A, B, or C" indicates options of: A, but not B and C; B, but not A and C; and C, but not A and B. In contrast, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more A, one or more B, and one or more C. Similarly, a list preceded by "a plurality of' (and variations thereon) and including "or" to separate listed elements indicates options of one or more of each of multiple of the listed elements. For example, the phrases "a plurality of A, B, or C" and "two or more of A, B, or C" indicate options of: one or more A and one or more B; one or more B and one or more C; one or more A and one or more C; and one or more A, one or more B, and one or more C.

As used herein, unless otherwise limited or specified, "substantially identical" refers to two or more components or systems that are manufactured according to the same process and specification, with variation between the components or systems that are within the limitations of acceptable tolerances for the relevant process or specification. For example, two components can be considered to be substantially identical if the components are manufactured according to the same standardized manufacturing steps, with the same materials, and within the same acceptable dimensional tolerances (e.g., as specified for a particular process or product).

As used herein, unless otherwise limited or specified, the term "set" refers to a set of one or more of the relevant component. Thus, for example, absent other indication, a "set of clasps" may include one clasp or multiple clasps. In contrast, a "set of multiple clasps" may include multiple clasps but not a single (sole) clasp).

Unless otherwise specified or limited, the terms "about" and "approximately," as used herein with respect to a reference value, refer to variations from the reference value of ± 20% or less (e.g., ± 15, ± 10%, ± 5%, etc.), inclusive of the endpoints of the range. Similarly, as used herein with respect to a reference value, the term "substantially equal" (and the like) refers to variations from the reference value of ± 5% or less (e.g., ± 2%, ± 1%, ± 0.5%) inclusive. Where specified in particular, "substantially" can indicate a variation in one numerical direction relative to a reference value. In particular, the term "substantially less" than a reference value (and the like) indicates a value that is reduced from the reference value by 30% or more (e.g., 35%, 40%, 50%, 65%, 80%), and the term "substantially more" than a reference value (and the like) indicates a value that is increased from the reference value by 30% or more (e.g., 35%, 40%, 50%, 65%, 80%).

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A mounting clip (100) for coupling an elongate object to a mounting bracket (50), the mounting clip (100) comprising:
a clip section (102, 104) that defines a bracket channel (142, 144) with an entrance (146), the clip section (102, 104) being deflectable by movement of the clip section (102, 104) into engagement with the mounting bracket (50) in an installation direction (118) to open the entrance (146) to receive the mounting bracket (50) into the bracket channel (142, 144); and
a bridge section (106) extending from the clip section (102, 104) to define an object passage (191) to receive an elongate object along an axial direction (A), the bridge section (106) including fingers (192, 196) that extend axially along and into the object passage to be aligned to resiliently engage the elongate object within the object passage (191), to urge the elongate object toward the bracket channel (142, 144).

2. The mounting clip (100) of claim 1, wherein the entrance (146) is a tapered entrance (184) defined by clasps (112, 132) of the clip section (102, 104) , the clasps (112, 132) being deflectable to widen the entrance (146) upon movement of the clip section (102, 104) into engagement with the mounting bracket (50) in the installation direction to receive the mounting bracket (50) into the bracket channel (142, 144).

3. The mounting clip (100) of either of claims 1 or 2, wherein the clip section (102, 104) further includes release tabs (186, 188) movable toward each other to widen the entrance (146).

4. The mounting clip (100) of any of the preceding claims, wherein clip section (102, 104) is a first clip section (102) and the bracket channel (142, 144) is a first bracket channel (142);
wherein the mounting clip (100) further comprises a second clip section (104) that is deflectable to open an entrance (146) of a second bracket channel (144) to receive the mounting bracket (50) into the second bracket channel (144), upon movement of the clip section (102, 104) into engagement with the mounting bracket (50) in the installation direction; and
wherein the bridge section (106) includes an arcuate portion (190) extending from and between the first clip section (102) and the second clip section (104).

5. The mounting clip (100) of any of the preceding claims, wherein the fingers (192, 196) include first fingers (192) extending axially from a first axial side (194) of the bridge section (106) and second fingers (196) extending axially from a second axial side (198) of the bridge section (106), opposite the first axial side (194).

6. The mounting clip (300) of any of the preceding claims, further comprising:
a third finger (324) extending laterally into the object passage (391) to engage the elongate object at an angular and axial offset from the first fingers (392) and the second fingers (396), and optionally or preferably a fourth finger (325) extending laterally into the object passage opposite the third finger (324) to engage the elongate object at an angular and axial offset from the first fingers (392) and the second fingers (396).

7. The mounting clip (300) of any of the preceding claims, wherein the clip section (302, 304) is a first clip section (302), the bracket channel (342, 344) is a first bracket channel (342), and the entrance (346) is a first entrance; and
wherein the mounting clip (300) further comprises a second clip section (304) that is connected to the first clip section (302) by the bridge section (306),
the second clip section (304) defining a second bracket channel (344) with a second entrance, and being deflectable by movement of the second clip section (304) into engagement with the mounting bracket (50) in the installation direction (318) to open the second entrance, to receive the mounting bracket (50) into the first bracket channel (342) simultaneously with the second bracket channel (344).

8. The mounting clip (300) of claim 7, wherein the first clip section (302) further includes a third finger (324) that extends laterally into the object passage (391) to biasingly engage the elongate object; and
wherein the second clip section (304) further includes a fourth finger (325) that extends laterally into the object passage (391) to biasingly engage the elongate object opposite the third finger (324).

9. The mounting clip (100) of any of the preceding claims, wherein the clip section (102, 104) includes a base (10, 128) that connects to the bridge section (106), and a first clasp (114) and a second clasp (116) that extend from the base in the installation direction (118) to define the entrance (146).

10. The mounting clip (100) of claim 9, wherein the clip section (102, 104) further includes release tabs (186, 188) extending from the base (108, 128) opposite the installation direction (118), the release tabs (186, 188) being aligned to be urged toward each other to move the first and second clasps (114, 116) apart, to release the engagement with the mounting bracket (50).

11. The mounting clip (100) of any of the preceding claims, wherein the clip section (102, 104) further includes stabilizing legs (176, 178) extending laterally away from the first bracket channel (142) and aligned to biasingly engage top and bottom sides (56, 60) of the mounting bracket (50) when the mounting bracket (50) is received within the first bracket channel (142).

12. The mounting clip (100) of any of the preceding claims, wherein the clip section (102, 104) further includes a locator protrusion (172, 174) that extends into the bracket channel (142, 144) , to be receivable within a corresponding hole (68) in the mounting bracket (50) to prevent translation of the mounting clip (100) laterally along the mounting bracket (50).

13. A method of securing an elongate object to a mounting bracket (50), the method comprising:
aligning the elongate object to extend in an axial direction (A) across the mounting bracket (50); and
providing a mounting clip (100), including a clip section (102, 104) and a bridge section (106) that extends from the clip section (102, 104),
moving the mounting clip (102, 104) into engagement with the mounting bracket (50) in an installation direction (118) to:
deflect open an entrance (146) of a bracket channel (142, 144) defined by the clip section (102, 104), to receive the mounting bracket (50) into the bracket channel (142, 144); and
receive the elongate object into an object passage (191) defined by the bridge section (106), so that fingers (192, 196) of the bridge section (106) that extend axially along and into the object passage (191) resiliently engage the elongate object within the object passage (191) to urge the elongate object toward the mounting bracket (50) within the bracket channel (142, 144).

14. The method of claim 13, wherein moving the mounting clip (100) into engagement with the mounting bracket (50) in the installation direction (118) one or more of:
inserts a locator protrusion (172, 174) of the mounting clip (100) into a hole (66, 68) in the mounting bracket (50) to fix a lateral location of the mounting clip (100) along the mounting bracket (50); or
engages stabilizing legs (176, 178) that extend laterally from the clip section (102, 104) with top and bottom sides (56, 60) of the mounting bracket (50) to biasingly center the mounting clip (100) on the mounting bracket (50).

15. The method of either of claims 13 or 14, further comprising:
releasing the mounting clip (100) from the mounting bracket (50) for removal or adjustment by urging together release tabs (186, 188) of the clip section (102, 104) to release clasps (112, 132) of the clip section (102, 104) from engagement with top and bottom sides (56, 60) of the mounting bracket (50).
